# EUROPÄISCHE PATENTSCHRIFT

(11) **EP 1 474 647 B1**
(45) Veröffentlichungstag und Bekanntmachung des Hinweises auf die Patenterteilung: **23.09.2009**
(21) Anmeldenummer: 03714708.9
(22) Anmeldetag: 14.01.2003
(51) Int. Cl.: F42D 5/04, B01J 8/12, F42B 33/06

(54) **VORRICHTUNG ZUR ENTSORGUNG GEFÄHRLICHER ODER HOCHENERGETISCHER MATERIALIEN**
DEVICE FOR THE REMOVAL OF DANGEROUS OR HIGH-ENERGY MATERIAL
DISPOSITIF DESTINE A L'ELIMINATION DE MATIERES DANGEREUSES OU A HAUTE ENERGIE

(30) Priorität: 06.02.2002 DE 10204815
(43) Veröffentlichungstag der Anmeldung: 10.11.2004
(73) Patentinhaber: Marold, Freimut Joachim, 46282 Dorsten (DE)
(72) Erfinder: MAROLD, Freimut, J., 71093 Weil im Schönbuch (DE); NEUMANN, Uwe, 71034 Böblingen (DE); WILHELM, Friedrich, 71116 Gärtringen (DE)
(74) Vertreter: Nunnenkamp, Jörg
(86) Internationale Anmeldenummer: PCT/EP2003/000254
(87) Internationale Veröffentlichungsnummer: WO 2003/067180

(56) Entgegenhaltungen:
- DE-A- 19 738 106
- DE-A- 19 911 175
- US-A- 5 582 119
- VAN HAM N H A: "Recycling and disposal of munitions and explosives" WASTE MANAGEMENT, ELSEVIER, NEW YORK, NY, US, Bd. 17, Nr. 2-3, 1997, Seiten 147-150, XP004108174 ISSN: 0956-053X

## Beschreibung

Die Erfindung betrifft eine Vorrichtung zur Entsorgung gefährlicher oder hochenergetischer Materialien mit
a) einem druckfesten Außengehäuse, in dem die Materialien unter kontrollierten Bedingungen zu einer Reaktion bringbar sind, deren Endprodukte ungefährlich sind;
b) mindestens einem in dem Außengehäuse sich von oben nach unten bewegenden Wanderbett, welches im dynamischen Gleichgewicht zwischen der Zufuhr eines Schüttgutes und der zu entsorgenden Materialien einerseits und dem Austrag einer Mischung aus Schüttgut und der Reaktion entstammender Reststoffe andererseits ausgebildet ist.

Eine derartige Vorrichtung ist in der DE 199 11 175C2 beschrieben. Diese ermöglicht eine kontinuierliche, also nicht nur chargenweise Durchführung der Reaktion am Entsorgungsgut. Dabei bewegt sich dieses zunächst in eine gewisse Tiefe des Wanderbettes hinein, wo es dann zur Reaktion gebracht wird. Das umgebende Wanderbett nimmt dabei freiwerdende Energie sowohl in mechanischer als auch in thermischer Form auf. Das Wanderbett bietet - wo dies gewünscht wird - große Oberflächen, an denen eine Reaktion ablaufen kann. Schließlich stellt das Wanderbett auch einen Wärmespeicher dar, der überall dort, wo die zu entsorgenden Materialien auf eine Reaktionstemperatur gebracht werden müssen, für Energieeinsparungen sorgen kann. Schüttgut und zu entsorgende Materialien können dem Wanderbett in vermischtem Zustand zugeführt werden oder getrennt auf das Wanderbett "aufgestreut" werden, so daß sich die Mischung erst innerhalb des Wanderbettes bildet. Die Zuführung bzw. das Aufstreuen kann auch in getrennten Stoffströmen, gegebenenfalls auch portioniert, erfolgen.

Bei der bekannten Vorrichtung nimmt das gesamte Schüttgut innerhalb des Außengehäuses in gleicher Weise an der Bildung des Wanderbettes teil. Insbesondere bewegt sich das Schüttgut - abgesehen von zu vernachlässigenden Effekten in der Nähe der Gehäusewandung - überall mit im wesentlichen derselben Geschwindigkeit axial nach unten. Es werden daher verhältnismäßig große Massen bewegt, was zweierlei Konsequenzen hat: Zum einen sind Regelvorgänge, mit denen der Ablauf der Reaktion innerhalb des Wanderbettes gesteuert werden soll, beispielsweise die Einstellung eines bestimmten Temperaturprofiles, verhältnismäßig träge. Zum anderen verläßt die Vorrichtung durch den Austrag einer verhältnismäßig großen Menge von Schüttgut relativ viel Wärme, was den Wärmehaushalt verschlechtern kann.

Aufgabe der vorliegenden Erfindung ist es, eine Vorrichtung der eingangs genannten Art so auszugestalten, daß sie energetisch günstiger und in ihrem Betriebsablauf leichter zu regeln ist.

Diese Aufgabe wird erfindungsgemäß dadurch gelöst, daß
c) in dem Wanderbett mindestens eine Schikane vorgesehen ist, welche das Wanderbett in einen Kernbereich, in dem sich das Wanderbett im wesentlichen unbehindert bewegt, und einen Ringbereich, in dem die axiale Bewegung des Wanderbetts verzögert ist, unterteilt.

Die Erfindung fußt auf der Erkenntnis, daß sich das Entsorgungsgut innerhalb des Wanderbettes in einer im wesentlichen geraden Linie vertikal von oben nach unten bewegt, also nur eine geringfügige Auswanderung in seitlicher Richtung erfolgt. Es lassen sich daher in dem Wanderbett "Kernbereiche" abgrenzen, durch welche das Entsorgungsgut durchwandert und in denen das Wanderbett aus Kapazitätsgründen seine volle Geschwindigkeit ausweisen soll. In den umgebenden Bereichen des Wanderbettes dagegen, die normalerweise von dem Entsorgungsgut nicht erreicht werden, genügt eine geringere Geschwindigkeit des Wanderbettes, da dessen Funktion in diesen Bereichen nicht dem Transport des Entsorgungsgutes sondern primär dem Auffangen der bei der Reaktion entstehenden thermischen und mechanischen Energie dient. Durch die Verzögerung der Bewegung des Wanderbettes außerhalb des "Kernbereiches" tritt pro Zeiteinheit eine kleinere Menge Schüttgut aus der Vorrichtung aus, was gleichbedeutend mit einem geringeren Wärmeverlust ist. Die kleineren bewegten Massen ermöglichen außerdem eine schnellere Regelung der in dem Außengehäuse stattfindenden Prozesse.

Bei geeigneter Ausgestaltung können die Schikanen zudem das Außengehäuse vor mechanischer Beschädigung schützen, dessen Erwärmung reduzieren und damit zu einer höheren Festigkeit des Außengehäuses beitragen.

Bei einer bevorzugten Ausführungsform der Erfindung umfaßt die Schikane mindestens ein trichterförmiges Bauteil. Ein derartiges trichterförmiges Bauteil verzögert nicht nur die Geschwindigkeit des Wanderbettes in den entsprechenden Bereichen sondern sorgt außerdem für einen Materialtransport in radialer Richtung, wobei Transportrichtung davon abhängt, ob sich das trichterförmige Bauteil nach unten verengt oder erweitert. Durch die Wahl des Konuswinkels des trichterförmigen Bauteiles läßt sich die Bremswirkung einstellen.

Im allgemeinen wird es erforderlich sein, daß die Schikane einen Stapel von übereinander angeordneten trichterförmigen Bauteilen umfaßt.

Dabei können alle trichterförmigen Bauteile gleichsinnig im Stapel angeordnet sein. Hierdurch wird insgesamt ein radialer Materialtransport bewirkt, dessen Richtung, wie oben schon angemerkt, davon abhängt, in welcher Richtung sich die trichterförmigen Bauteile erweitern. Im allgemeinen dürfte es sich empfehlen, daß sich die trichterförmigen Bauteile nach unten verjüngen. In diesem Falle ist die radiale Bewegungskomponente des Wanderbettes, die durch die Schikane hervorgerufen wird, radial nach innen gerichtet. Dies hat den Vorteil, daß gegebenenfalls aus dem Kernbereich ausgewandertes Entsorgungsgut wieder in den Kernbereich zurückgeleitet wird. Außerdem werden Hilfsstoffe, beispielsweise Heiz- oder Kühlgase aber auch sonstige Chemiekalien, die von außen in das Außengehäuse eingebracht werden, von diesen speziell gestalteten trichterförmigen Bauteilen nach innen in den Kernbereich, wo die Reaktionen stattfinden, eingeleitet.

Wird kein oder nur ein geringerer Materialtransport in radialer Richtung gewünscht, können mindestens einige trichterförmige Bauteile im Stapel gegensinnig angeordnet sein.

Durch die im Wanderbett angeordnete, die Bewegung des Wanderbettes in bestimmten Bereichen verzögernde Schikane dürfen jedoch in dem Wanderbett keine Hohlräume entstehen. Deshalb empfiehlt sich eine Ausgestaltung der Erfindung, bei welcher mindestens ein trichterförmiges Bauteil Ausnehmungen aufweist, welche ein Nachrutschen von Schüttgut unter das trichterförmige Bauteil gestatten.

Diese Ausnehmungen können, wenn etwa das trichterförmige Bauteil aus Blech besteht, an dem den größeren Durchmesser aufweisenden Rand der trichterförmigen Bauteile angebracht sein.

Alternativ ist es auch möglich, daß das trichterförmige Bauteil als Lochblech ausgebildet ist oder aus Siebmaterial besteht. Das Schüttgut rutscht dann durch die Löcher des Lochbleches oder durch die Maschen des Siebmaterials unter das trichterförmige Bauteil und füllt dort in Entstehung begriffene Hohlräume wieder auf.

Eine vorteilhafte Ausgestaltung der Erfindung zeichnet sich dadurch aus, daß an einer dem Kernbereich nicht direkt zugewandten Fläche der Schikane ein elektrischer Sensor angeordnet ist. Dieser elektrische Sensor kann grundsätzliche beliebige physikalische Parameter in der Nähe des Kernbereiches, also auch in der Nähe der Reaktionszone, erfassen. Dies war bei Vorrichtunge, wie sie in der DE 199 11 175 C2 beschrieben sind, bisher nicht möglich, da derartige Sensoren dort im sich bewegenden Wanderbett zerstört worden wären.

In gleicher Weise ist es nach einer weiteren Ausführungsform der Erfindung möglich, daß an einer dem Kernbereich nicht unmittelbar zugewandten Fläche der Schikane ein Einführungsrohr für einen Hilfsstoff verlegt ist. Auch derartige Einführungsrohre wären beim Gegenstand der DE 199 11 175 C2 durch das sich bewegende Wanderbett zerstört worden.

Besonders bevorzugt wird diejenige Ausführungsform der erfindungsgemäßen Vorrichtung, bei welcher mehrere Schikanen in dem Außengehäuse angeordnet sind und parallele Kernbereiche umgeben, durch die jeweils ein Wanderweg für das Entsorgungsgut führt. Auf diese Weise läßt sich die Kapazität der erfindungsgemäßen Vorrichtung vervielfachen, ohne in entsprechender Weise auch die Menge des Schüttgutes vervielfachen zu müssen. Die gesamte Vorrichtung baut außerordentlich kompakt.

Unter Umständen kann es sich empfehlen, daß diese mehreren Schikanen jeweils von einem Innengehäuse umgeben sind, das dicht mit dem Außengehäuse verbunden ist, wobei die Zwischenräume zwischen dem Außengehäuse und dem Innengehäuse und die Zwischenräume zwischen den Innengehäusen mit einem Schüttgut angefüllt sind, das an der Wanderbewegung nicht teilnimmt. Im Ergebnis stellt eine derartige Vorrichtung eine Mehrzahl von mit Schikanen versehenen "Einzelvorrichtungen" dar, die in einem gemeinsamen Außengehäuse zusammengefaßt sind. Das Schüttgut, welches in den Zwischenräumen angeordnet ist und an der Wanderbewegung selbst nicht teilnimmt, nimmt im wesentlichen nur mechanische Energie auf und erhöht die Gesamtmasse an zur Verfügung stehendem Schüttgut, die direkt mit der Sicherheit korreliert ist, mit welcher die Vorrichtung betrieben wird. Die "Einzelvorrichtungen" innerhalb der Gesamtvorrichtung können vollständig unabhängig voneinander, auch bei unterschiedlichen Reaktionsbedingungen, betrieben werden, so daß entweder in unterschiedlichen "Einzelvorrichtungen" unterschiedliches Entsorgungsgut verarbeitet wird oder aus Kapazitätsgründen nur die eine oder andere dieser "Einzelvorrichtungen" zu einer gegebenen Zeit in Betrieb ist.

Das Schüttgut in den Zwischenräumen zwischen dem Außengehäuse und den Innengehäusen und in den Zwischenräumen zwischen den Innengehäusen kann aus dem selben Schüttgut bestehen wie das Material innerhalb der Innengehäuse.
Dies stellt insoweit für den Betreiber der Vorrichtung eine Vereinfachung dar, als er nur eine Art von Schüttgut bereithalten muß.

Da aber das Schüttgut in den Zwischenräumen an der Wanderbettbewegung nicht teilnimmt, braucht es grundsätzlich nicht fließfähig zu sein. Es ist daher auch eine Ausgestaltung der Erfindung möglich, bei welcher das Schüttgut in den Zwischenräumen zwischen dem Außengehäuse und den Innengehäusen sowie in den Zwischenräumen zwischen den Innengehäusen aus Schrott, Keramik, insbesondere Keramikbruchmaterial oder Ähnlichem besteht. Insgesamt wird so die Befüllung der Vorrichtung mit Schüttgut preiswerter.

Ausführungsbeispiele der Erfindung werden nachfolgend anhand der Zeichnung näher erläutert; es zeigen
- Figur 1: einen Axialschnitt durch den mittleren Bereich eines ersten Ausführungsbeispieles der erfindungsgemäßen Vorrichtung;
- Figur 2: einen Schnitt gemäß Linie II-II von Figur 1;
- Figur 3: einen Axialschnitt, ähnlich der Figur 1 durch ein zweites Ausführungsbeispiel der erfindungsgemäßen Vorrichtung;
- Figur 4: einen Schnitt gemäß Linie IV-IV von Figur 3;
- Figur 5: einen Axialschnitt ähnlich den Figuren 1 und 3 durch ein drittes Ausführungsbeispiel der erfindungsgemäßen Vorrichtung;
- Figur 6: einen Schnitt gemäß Linie VI-VI von Figur 5.

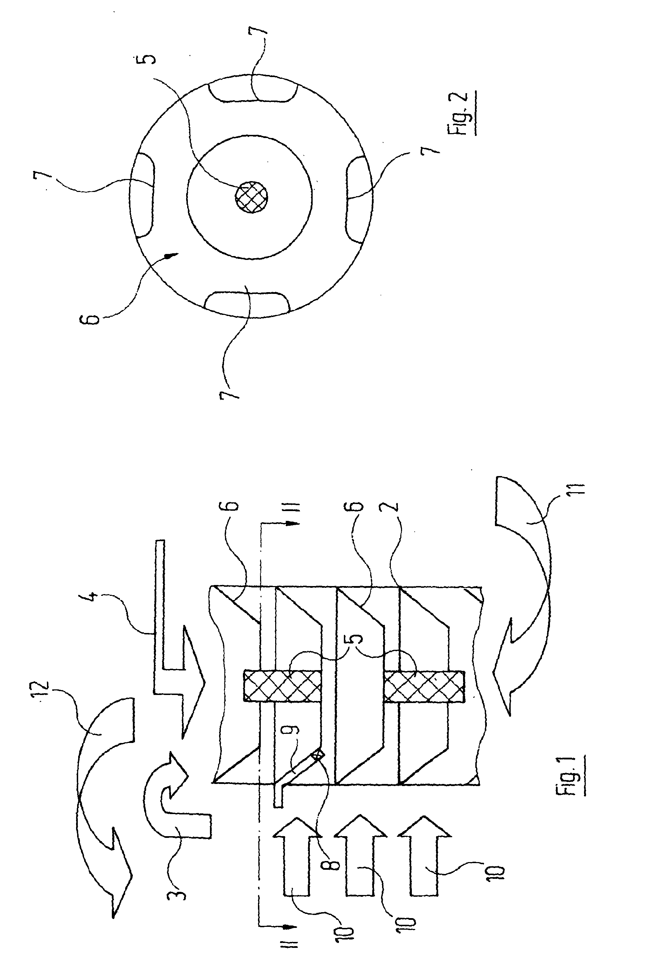

Figur 1 stellt einen Axialschnitt durch den mittleren Bereich eines Schachtofens dar, wie er in seinem grundsätzlichen Aufbau aus der oben erwähnten DE 199 11 175 C2 bekannt ist. Die nachfolgende Beschreibung dieses Schachtofens beschränkt sich im wesentlichen auf diejenigen Merkmale, in denen sich der dargestellte Schachtofen von dem bekannten unterscheidet; ergänzend wird auf den Inhalt der DE 199 11 175 C2 verwiesen.

An den in Figur 1 dargestellten Ausschnitt des Gehäuses 2 des Schachtofens ist unten ein Austragabschnitt angesetzt zu denken, in dem sich eine Austragöffnung befindet. Auf das obere Ende des Gehäuses 2 ist ein nicht dargestellter Deckel aufgesetzt, in dem sich verschiedene Einlaß- und Auslaßöffnungen befinden. Über eine dieser Einlaßöffnungen wird dem Innenraum des Gehäuses 2 im Sinne des Pfeiles 3 eine Schüttung von Stahlkugeln zugeführt, welche im betriebsbereiten Zustand im wesentlichen den gesamten Innenraum des Gehäuses 2 ausfüllt; die Stahlkugeln sind dabei so dimensioniert, daß sie innerhalb des Gehäuses 2 eine fließfähige Schüttung nach Art eines Wanderbettes bilden.

Über eine weitere Einlaßöffnung im Deckel des Gehäuses 2 wird im Sinne des Pfeiles 4 das Entsorgungsgut 5 zugeführt. Nachfolgend wird davon ausgegangen, daß es sich dabei um Munition handelt. Diese vermischt sich mit den Stahlkugeln und bewegt sich gemeinsam mit diesen, in das Wanderbett integriert, innerhalb des Schachtofens nach unten.

Die oben erwähnte, in der Zeichnung nicht mehr dargestellte Austragöffnung ist mit einer ebenfalls nicht dargestellten Austrageinrichtung verbunden, welche eine Mischung aus den als Schüttgut verwendeten Stahlkugeln und dem Schrott und sonstigen Reststoffen, die bei der Reaktion des Entsorgungsguts entstehen, abzieht. In einer Abscheideeinrichtung wird das Schüttgut von den sonstigen Reststoffen, insbesondere dem Schrott getrennt. Das Schüttgut wird über eine Leitung dem entsprechenden Einlaß im Deckel des Gehäuses wieder zugeführt, während der Schrott und die sonstigen aus der Reaktion stammenden festen Reststoffe einer endgültigen Entsorgung gefahrlos zugeführt werden können.

So weit stimmt die Bauweise des in Figur 1 dargestellten Schachtofens mit demjenigen der DE 199 11 175 C2 überein.

Neu bei dem in Figur 1 dargestellten Schachtofen ist eine Reihe von koaxial übereinander angeordneten, trichterförmigen Einbauten 6, die in nachfolgend noch zu beschreibender Weise als "Schikanen" dienen und die axial nach unten gerichtete Strömung des Schüttgutes in den Randbereiches des Gehäuses 2 bremsen. Jede dieser aus Blech bestehenden Einbauten 6 besitzt an ihrem oberen Rand einen Durchmesser, der dem Innendurchmesser des Gehäuses 2 in etwa entspricht; der Durchmesser der Austrittsöffnung am unteren Rand der Einbauten 6 ist so groß, daß auch die größten im Entsorgungsgut enthaltenen Teile diese Austrittsöffnung mühelos passieren können.

Wie Figur 2 zeigt, ist jede Einbaute 6 an ihrem oberen Rand mit vier einander paarweise gegenüberliegenden Ausnehmungen 7 versehen, die jeweils so groß sind, daß sie mindestens drei der im Schüttgut enthaltenen Stahlkugeln (und natürlich die mitgeführten, von der Abscheideinrichtung nicht ausgesonderten und aus der Munition stammenden Schrottpartikel) passieren läßt. Ihr Sinn wird weiter unten deutlich werden.

An der Unterseite einer der Einbauten 6 ist in Figur 1 ein Sensor 8 erkennbar, der zur Messung irgendeines Betriebsparameters in der Nähe der Reaktionszone, beispielsweise zur Messung der dort herrschenden Temperatur oder des dort herrschenden NOₓ-Anteiles, verwendet werden kann. Die elektrischen Kabel und/oder sonstigen Anschlüsse, beispielsweise Gasansaugrohre, des Sensors 8 sind über ein Schutzrohr 9, welches ebenfalls an der Unterseite der Einbaute 6 verlegt ist, aus dem Schachtofen ausgeführt und mit einer geeigneten Auswertschaltung (nicht dargestellt) verbunden. In ähnlicher Weise können im Schutze einer Einbaute 6, an deren Unterseite entlang, Rohre in den Innenraum des Gehäuses 2 eingeführt sein, über welche Hilfsstoffe, beispielsweise Heiz- oder Kühlgase oder Chemikalien, in den Reaktor eingebracht werden können. Die Einbringung derartiger Hilfsstoffe ist durch die Pfeile 10 in Figur 1 symbolisiert.

Der in Figur 1 dargestellte Schachtofen wird von einem Kreislaufgas durchströmt, das von unten im Sinne des Pfeiles 11 in das Gehäuse 2 des Schachtofens eintritt und oben im Sinne des Pfeiles 12 wieder austritt. Dieses Kreislaufgas dient zum einen bei Bedarf zur Erwärmung des in dem Gehäuse 2 befindlichen Wanderbettes und trägt zum anderen gasförmige Reaktionsprodukte aus.

Der oben beschriebene Schachtofen funktioniert wie folgt:

Durch die Zugabe von Schüttgut, das überwiegend aus Stahlkugeln besteht, mit zunehmender Betriebsdauer aber auch Schrottpartikel aus den entsorgten Granathülsen enthält, entsprechend dem Pfeil 3 bildet sich, wie schon erwähnt, innerhalb des Gehäuses 2 ein Wanderbett aus. Aufgrund der Schikanen 6 wird die axiale Strömungsgeschwindigkeit dieses Wanderbettes im radial außenliegenden Bereich des Gehäuses 2 verlangsamt. Dem Schüttgut und allen anderen Substanzen, welche auf die konischen Flächen der Einbauten 6 auftreffen, wird eine radial nach innen gerichtete Bewegungskomponente verliehen. Im Ergebnis entsteht eine "Kernströmung" in einem radial innliegenden Kernbereich des Wanderbettes, also etwa innerhalb des Bereiches, dessen Durchmesser dem Durchmesser der unteren Austrittsöffnungen der Einbauten 6 entspricht. In den Randbereichen bewegt sich das Schüttgut entlang der oberen, konisch geneigten Flächen der Einbauten 6 nach unten und innen, wobei durch die Ausnehmungen 7 dafür gesorgt ist, daß unterhalb der Einbauten 6 keine Hohlräume entstehen. Vielmehr rutscht Schüttgut durch die Ausnehmungen 7 in dem jeweils erforderlichen Ausmaß axial nach unten nach.

Durch die Größe des Konuswinkels, den die trichterförmigen Einbauten 6 aufweisen, läßt sich das Ausmaß einstellen, in dem die Strömungsgeschwindigkeit des Schüttgutes in den radial außenliegenden Bereichen des Gehäuses 2 reduziert wird.

Gegenüber dem in der DE 199 11 175 C2 beschriebenen, bekannten Schachtofen läßt sich die Menge des zirkulierenden Schüttgutes auf diese Weise erheblich reduzieren. Dadurch werden zum einen die Wärmeverluste minimiert, da geringere Materialmengen aus dem Gehäuse 2 ausgetragen werden. Zum anderen kann die Regelung der in dem Gehäuse 2 des Schachtofens ablaufenden Prozesse, beispielsweise die Temperaturführung, mit sehr viel geringerer Trägheit erfolgen, da an den Regelprozessen geringere Massen beteiligt sind.

Ein weiterer Vorteil der Einbauten 6 besteht darin, daß die Wand des Gehäuses 2 insgesamt kälter bleibt, da eine radiale Strömung aus den inneren, heißeren Bereichen des Gehäuses 2 nach außen durch die Einbauten 6 verhindert bzw. wieder nach radial innen umgelenkt wird. Für die Wand des Gehäuses 2 sind somit höhere Festigkeiten zu erwarten.

Die Einbauten 6 bieten darüber hinaus für Sensoren 8 und Zufuhrrohre für Hilfsstoffe einen Schutz. Eine Sprengung der im radial innenliegenden "Kernbereich" vom Wanderbett durchgeführten Munition 5 hat keine direkte Einwirkung auf die Wand des Behälters.

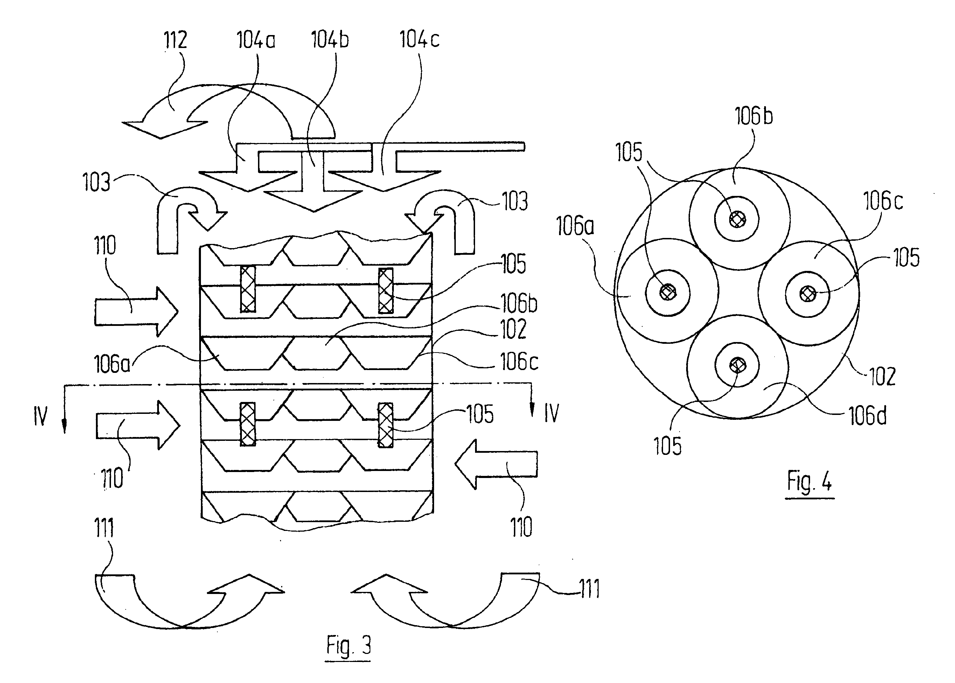

Das in den Figuren 3 und 4 dargestellte Ausführungsbeispiel des Schachtofens weist große Ähnlichkeit mit dem oben anhand der Figuren 1 und 2 beschriebenen Ausführungsbeispiel auf; entsprechende Teile sind daher mit demselben Bezugszeichen zuzüglich 100 gekennzeichnet.

Im wesentlichen unverändert wiederzufinden in Figur 3 ist das Gehäuse 102 des Schachtofens. Die Pfeile 103 symbolisieren wiederum die Einbringung von Schüttgut im oberen Bereich des Gehäuses 2 zur Ausbildung eines Wanderbettes; die Pfeile 110 symbolisieren die Zugabe von Hilfsstoffen in verschiedener axialer Höhe des Gehäuses 102. Die Pfeile 111 stehen für die Zufuhr des Kreislaufgases am unteren Ende des Gehäuses 102 und der Pfeil 112 für die Abfuhr dieses Kreislaufgases am oberen Ende des Gehäuses 102.

Statt eines einzigen Stapels koaxial übereinander angeordneter Einbauten 6 wie in Figur 1 besitzt das Ausführungsbeispiel der Figuren 3 und 4 insgesamt vier Stapel von koaxial übereinander angeordneten Einbauten 106a, 106b, 106c und 106d, die achsparallel in der in Figur 4 gezeigten Anordnung durch das Gehäuse 102 verlaufen. Jede dieser Einbauten 106a ist wiederum trichterförmig, sich nach unten verjüngend, aus einem Blech hergestellt. Natürlich besitzen die Einbauten 106a bis 106d beim Ausführungsbeispiel der Figur 2 am oberen Rand nicht mehr den Durchmesser des Gehäuses 102. Sie liegen aber alle an einer Stelle ihres oberen Randes an der Wand des Gehäuses 102 und an jeweils zwei anderen Stellen an den beiden benachbarten Einbauten 106a bis 106d an, wie dies der Figur 4 zu entnehmen ist. Besondere Ausnehmungen am oberen Rand der Einbauten 106a bis 106d sind nicht mehr erforderlich, da zwischen den einzelnen Einbauten 106a bis 106d ausreichend Raum bleibt, in denen Schüttgut zur Unterseite der Einbauten 106a bis 106e rutschen und auf diese Weise die Entstehung von Hohlräumen unterbinden kann.

Durch die vier Stapel von Einbauten 106a bis 106d werden vier "Kernbereiche" innerhalb des im Gehäuse 102 vorhandenen Wanderbettes ausgebildet, die im wesentlichen jeweils durch diejenigen zylindrischen Bereiche des Wanderbettes gebildet sind, die durch gedachte, die unteren Austrittsöffnungen der Einbauten 106a bis 106d durchtretende Zylinder begrenzt sind. Um diese Kernbereiche herum liegen jeweils ringförmige Bereiche vor, deren Außendurchmesser etwa dem Außendurchmesser der Einbauten 106a bis 106d entspricht und in denen die axiale Strömung des Schüttgutes verlangsamt und gegebenenfalls durch eine radiale Strömung überlagert ist.

Alle vier "Kernbereiche" stellen Zonen dar, in denen Munition 105 das Wanderbett durchlaufen kann. Beim Ausführungsbeispiel der Figuren 3 und 4 gibt es also vier derartige "Wanderzonen" von Munition 105, denen vier Eintrittsöffnungen im nicht dargestellten Deckel des Gehäuses 102 zugeordnet sind. Die Zuflußströme an Munition 105 zu den von den Einbauten 106a, 106b und 106c umgebenen Kernbereichen bzw. Wanderzonen sind durch die Pfeile 104a, 104b und 104c symbolisiert.

Vorteil der in Figur 3 dargestellten Ausführungsform eines Schachtofens ist, daß dieser bei einer Vervielfachung der Entsorgungskapazität gleichwohl kompakt baut. Er benötigt nicht das selbe Vielfache an Schüttgut, da sich die verschiedenen "Wanderwege" bzw. Kernbereiche, in denen Reaktionen und Explosionen stattfinden können, das Schüttgut gewissermaßen "teilen". In gewissem Umfange lassen sich auch die physikalischen Parameter in den verschiedenen "Kernbereichen" unterschiedlich gestalten, also beispielsweise unterschiedliche Temperaturverläufe einstellen. Dies ist insbesondere dann von Bedeutung, wenn unterschiedliches Entsorgungsgut gleichzeitig verarbeitet werden soll.

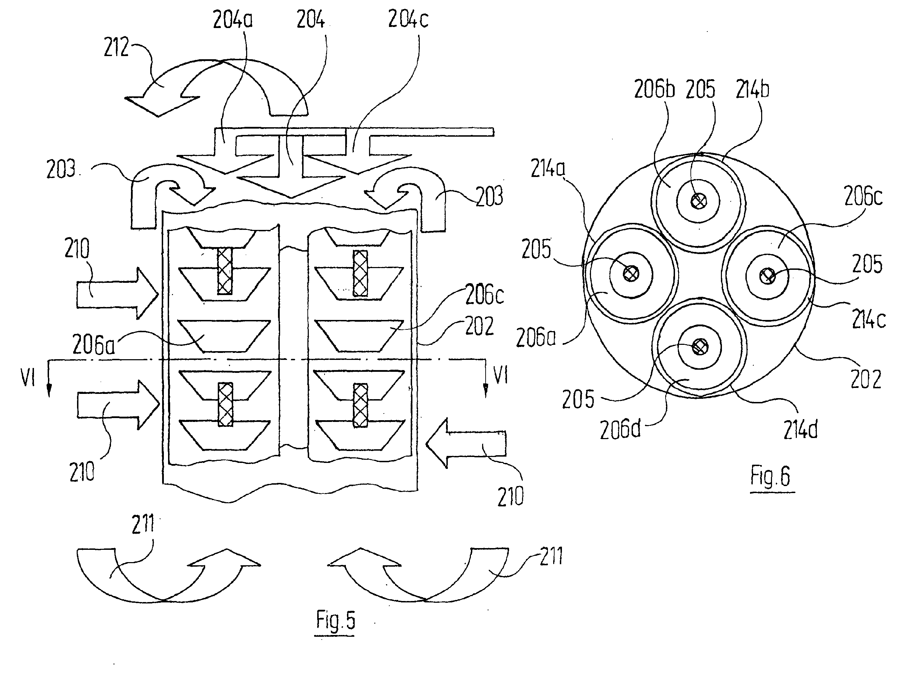

Der letztgenannte Gedanke ist bei dem in Figuren 5 und 6 dargestellten weiteren Ausführungsbeispiel eines Schachtofens konsequent fortgeführt. Dieses ähnelt sehr stark dem Ausführungsbeispiel der Figuren 3 und 4; entsprechende Teile sind daher mit demselben Bezugszeichen, jedoch erneut um 100 erhöht, gekennzeichnet.

Das Ausführungsbeispiel der Figuren 5 und 6 weist insbesondere ebenso wie dasjenige der Figuren 3 und 4 innerhalb eines gemeinsamen Außengehäuses 202 vier Stapel von koaxial übereinander angeordneten Einbauten 206a bis 206d auf, die durch ihre unteren, den kleineren Durchmesser aufweisenden Ränder vier Kernbereiche definieren, in denen eine schnellere axiale Strömung des Schüttgutes stattfinden kann als in den diese Kernbereiche umgebenden Ringbereichen und die gleichzeitig vier "Wanderwege" für zu entsorgende Munition 205 darstellen. Die Pfeile 203, welche die Zufuhr von Schüttgut im oberen Bereich des Außengehäuses 202 repräsentieren, die Pfeile 210, welche die Zufuhr von Hilfsstoffen in unterschiedlichen axialen Höhen des Außengehäuses 202 repräsentieren, die Pfeile 211, welche die Zufuhr des Kreislaufgases im unteren Gehäusebereich repräsentieren, der Pfeil 212, welcher die Abfuhr des Kreislaufgases aus dem oberen Gehäusebereich repräsentiert, und die Pfeile 204a, 204b und 204c, welche die Zufuhr zu den von den Einbauten 106a, 106b, 106c umgebenen Kernbereichen repräsentieren, stimmen identisch mit den entsprechenden Pfeilen der Figur 3 überein.

Das Ausführungsbeispiel der Figuren 5 und 6 unterscheidet sich vom denjenigen der Figuren 3 und 4 dadurch, daß jeder Stapel von übereinander angeordneten Einbauten 206a bis 206d jeweils von einem eigenen Innengehäuse 214a bis 214d umgeben ist, das an seinem oberen und unteren Ende gasdicht mit dem Außengehäuse 202 bzw. dessen Deckel und dessen Austragabschnitt, verbunden ist. Auf diese Weise entstehen im Ergebnis innerhalb des gemeinsamen Außengehäuses 202 vier getrennt betreibbare Schachtöfen, in denen unterschiedliche physikalische Parameter eingehalten, insbesondere also unterschiedliche Temperaturprofile gefahren, unterschiedliche Hilfsstoffe zugesetzt und unterschiedliche Arten von Entsorgungsgut bearbeitet werden können.

Die vier Innengehäuse 214a bis 214d können jeweils zu gesonderten Austragöffnungen am unteren Ende des Außengehäuses 202 führen, wenn die die Innengehäuse 214a bis 214d verlassenden Materialströme getrennt weiter verarbeitet werden sollen. In vielen Fällen genügt jedoch eine einzige, allen Innengehäusen 214a bis 214d gemeinsam zugeordnete Austragöffnung.

Die Zwischenräume zwischen dem Außengehäuse 202 und den einzelnen Innengehäusen 214a bis 214d sowie die Zwischenräume zwischen den Innengehäusen 212a bis 214d sind beim Ausführungsbeispiel der Figuren 5 und 6 mit einem Schüttgut angefüllt, das - anders als beim Ausführungsbeispiel der Figuren 3 und 4 - an der Bildung des Wanderbettes nicht teilnimmt, daher permanent in dem Außengehäuse 202 verbleibt und auch nicht im Kreise geführt werden muß. Dies hat wieder den Vorteil, daß kleinere Mengen an Schüttgut zu bewegen sind, was dem Energiehaushalt dieses Schachtofens zugute kommt.

Bei dem Schüttgut, das in diesen Zwischenräumen eingefüllt ist, kann es sich um das gleiche Schüttgut handeln, das innerhalb der verschiedenen Innengehäuse 214a bis 214d Wanderbetten bildet, also beispielsweise um Stahlkugeln. Da jedoch das Schüttgut in diesen Zwischenräumen nach dem oben Gesagten nicht fließfähig sein muß, kann hier auch unregelmäßig geformter Mettallschrott, Keramikbruchstücke oder Ähnliches eingebracht werden. Die Funktion des Schüttgutes in diesen Zwischenräumen besteht ausschließlich darin, die mechanische und in kleinerem Umfang auch thermische Energie aufzunehmen, die bei der Reaktion bzw. Detonation des Entsorgungsgutes 205 in den vier Kernbereichen, welche diese Vorrichtung aufweist, gebildet wird. Dieses Schüttgut stützt gleichzeitig die Innengehäuse 214a bis 214d ab, so daß diese mechanisch keinen großen Beanspruchungen ausgesetzt sind.

Beim Ausführungsbeispiel der Figuren 5 und 6 besitzen die verschiedenen Einbauten 206a bis 206d am oberen Rand einen Außendurchmesser, der etwas geringer als der Innendurchmesser der verschiedenen Innengehäuse 214a bis 214d ist. Ein "Nachrutschen" von Schüttgut unter die Einbauten 206a bis 206d zur Vermeidung von Hohlräumen ist durch den Zwischenraum zwischen den oberen Rändern der Einbauten 206a bis 206d und der Mantelfläche der Innengehäuse 214a bis 214d möglich, ohne daß die oberen Ränder der Einbauten 206a bis 206d hierzu mit Ausnehmungen versehen sein müssten, die den Ausnehmungen 7 beim Ausführungsbeispiel der Figuren 1 und 2 entsprechen würden.

Bei den oben beschriebenen Ausführungsbeispielen bestanden die Einbauten 6, 106, 206 jeweils aus trichterförmig zusammengefügten Blechen, die nicht nur die Axialströmung des Wanderbettes außerhalb der "Kernbereiche" verzögerten sondern außerdem eine Materialströmung radial von außen nach innen zur Folge hatten. Wird eine derartige Radialbewegung nicht gewünscht, können als die Bewegung des Schüttgutes außerhalb der Kernbereiche verzögernde Schikanen auch Einbauten verwendet werden, die als ebene Roste oder Lochplatten ausgebildet sind. Auch eine Ausgestaltung wäre möglich, bei der die Einbauten zwar weiterhin als Trichter gestaltet sind, die Orientierung von übereinander liegenden Trichtern jedoch umgekehrt wird, so daß beispielsweise ein oben liegender Trichter sich nach unten verjüngt, während der darunter liegende Trichter sich nach unten erweitert. Auf diese Weise entstünde eine Art Zick-Zack-Bewegung des Schüttgutes in den Ringbereichen, welche die die schnelle Schüttgutströmung führenden Kernbereiche umgeben.

Beim Ausführungsbeispiel der Figuren 1 und 2 können die das "Nachrutschen" von Schüttgut unter die Einbauten 6 gewährleistenden Ausnehmungen 7 auch weggelassen werden; statt dessen sind dann die trichterförmigen Einbauten 6 aus Lochblechen oder Sieben herzustellen.

Das in den Figuren 1 und 2 dargestellte Ausführungsbeispiel der Erfindung lässt sich dadurch modifizieren, daß in übereinander liegenden Einbauten 6 die Ausnehmungen 7 nicht axial fluchten. Vielmehr können die übereinander liegenden Einbauten 6 so gegeneinander verdreht werden, daß das Schüttgut keinen geradlinigen, achsparallelen Weg durch den Stapel von Einbauten 6 findet.

## Patentansprüche

1. Vorrichtung zur Entsorgung gefährlicher oder hochenergetischer Materialien mit
a) einem druckfesten Außengehäuse, in dem die Materialien unter kontrollierten Bedingungen zu einer Reaktion bringbar sind, deren Endprodukte ungefährlich sind;
b) mindestens einem in dem Außengehäuse sich von oben nach unten bewegenden Wanderbett, welches im dynamischen Gleichgewicht zwischen der Zufuhr eines Schüttgutes und den zu entsorgenden Materialien einerseits und dem Austrag einer Mischung aus Schüttgut und der Reaktion entstammender Reststoffe andererseits ausgebildet ist,
**dadurch gekennzeichnet, daß**
c) in dem Wanderbett mindestens eine Schikane (6; 106; 206) vorgesehen ist, welche das Wanderbett in einen Kernbereich, in dem sich das Wanderbett im wesentlichen unbehindert bewegt, und in einen den Kernbereich umgebenden Ringbereich, in dem die axiale Bewegung des Wanderbetts verzögert ist, unterteilt.

2. Vorrichtung nach Anspruch 1, **dadurch gekennzeichnet,**
**daß** die Schikane (6; 106; 206) ein trichterförmiges Bauteil umfaßt.

3. Vorrichtung nach Anspruch 2, **dadurch gekennzeichnet,**
**daß** die Schikane (6; 106; 206) einen Stapel von übereinander geordneten trichterförmigen Bauteilen umfaßt.

4. Vorrichtung nach Anspruch 3, **dadurch gekennzeichnet,**
**daß** die trichterförmigen Bauteile (6; 106; 206) gleichsinnig im Stapel angeordnet sind.

5. Vorrichtung nach Anspruch 3, **dadurch gekennzeichnet,**
**daß** mindestens einige trichterförmige Bauteile im Stapel gegensinnig angeordnet sind.

6. Vorrichtung nach einem der Ansprüche 3 bis 5, **dadurch**
**gekennzeichnet, daß** mindestens ein trichterförmiges Bauteil (6) Ausnehmungen (7) aufweist, welche ein Nachrutschen von Schüttgut unter das trichterförmige Bauteil (6) gestatten.

7. Vorrichtung nach Anspruch 6, **dadurch gekennzeichnet,**
**daß** die Ausnehmungen (7) an dem den größeren Durchmesser aufweisenden Rand des mindestens einen trichterförmigen Bauteils (6) angeordnet sind.

8. Vorrichtung nach Anspruch 6, **dadurch gekennzeichnet,**
**daß** das mindestens eine trichterförmige Bauteil als Lochblech ausgebildet ist;

9. Vorrichtung nach Anspruch 6, **dadurch gekennzeichnet,**
**daß** das mindestens eine trichterförmige Bauteil aus Siebmaterial besteht.

10. Vorrichtung nach einem der vorhergehenden Ansprüche,
**dadurch gekennzeichnet, daß** an einer dem Kernbereich nicht direkt zugewandten Fläche der Schikane (6) ein Sensor (8) angeordnet ist.

11. Vorrichtung nach einem der vorhergehenden Ansprüche,
**dadurch gekennzeichnet, daß** an einer dem Kernbereich nicht unmittelbar zugewandten Fläche der Schikane mindesten ein Einführungsrohr für mindestens einen Hilfsstoff verlegt ist.

12. Vorrichtung nach einem der vorhergehenden Ansprüche,
**dadurch gekennzeichnet, daß** mehrere Schikanen (106a bis 106d; 206a bis 206d) in dem Außengehäuse (102; 202) angeordnet sind und parallele Kernbereiche umgeben, durch die jeweils ein Wanderweg für das Entsorgungsgut führt.

13. Vorrichtung nach Anspruch 12, **dadurch gekennzeichnet,**
**daß** die Schikanen (206a bis 206d) jeweils von einem Innengehäuse (214a bis 214d) umgeben sind, das dicht mit dem Außengehäuse (202) verbunden ist, wobei die Zwischenräume zwischen dem Außengehäuse (202) und den Innengehäusen (214a bis 214d) und die Zwischenräume zwischen den Innengehäusen (214a bis 214d) mit einem Schüttgut angefüllt sind, das an der Wanderbettbewegung nicht teilnimmt.

14. Vorrichtung nach Anspruch 13, **dadurch gekennzeichnet,**
**daß** das Schüttgut in den Zwischenräumen zwischen dem Außengehäuse (202) und den Innengehäusen (214a bis 214d) und in den Zwischenräumen zwischen den Innengehäusen (214a bis 214d) aus demselben Material besteht wie das Schüttgut innerhalb der Innengehäuse (214a bis 214d).

15. Vorrichtung nach Anspruch 13, **dadurch gekennzeichnet,**
**daß** das Schüttgut in den Zwischenräumen zwischen dem Außengehäuse (202) und den Innengehäusen (214a bis 214d) sowie in den Zwischenräumen zwischen den Innengehäusen (214a bis 214d) aus Metallschrott, Keramik, insbesondere Keramikbruchstücken, oder Ähnlichem besteht.

## Claims

1. A device for disposing hazardous or high-energy materials with
a) a compression-proof outer casing, in which the materials can be made to react under controlled conditions, yielding non-hazardous end products;
b) at least one migrating bed moving from the top down in the outer casing, which is designed in dynamic equilibrium between the supply of loose material and the materials to be disposed on the one hand, and the discharge of a mixture of loose material and residual materials arising from the reaction on the other,
**characterized in that**
c) at least one baffle plate (6; 106; 206) is provided in the migrating bed, which divides the migrating bed into a core area, in which the migrating bed moves essentially unimpeded, and into an annular area enveloping the core area, in which the axial movement of the migrating bed is delayed.

2. The device according to claim 1, **characterized in that** the baffle plate (6; 106; 206) exhibits a funnel-shaped component.

3. The device according to claim 2, **characterized in that** the baffle plate (6; 106; 206) encompasses a stack of funnel-shaped components arranged one atop the other.

4. The device according to claim 3, **characterized in that** the funnel-shaped components (6; 106; 206) are arranged in the same direction in the stack

5. The device according to claim 3, **characterized in that** at least some funnel-shaped components are arranged in the opposite direction in the stack.

6. The device according to one of claims 3 to 5, **characterized in that** at least one funnel-shaped component (6) exhibits recesses (7) that permit loose material to descend under the funnel-shaped component (6).

7. The device according to claim 6, **characterized in that** the recesses (7) are arranged at the edge of the at least one funnel-shaped component (6) exhibiting the larger diameter.

8. The device according to claim 6, **characterized in that** the at least one funnel-shaped component is designed as a perforated plate.

9. The device according to claim 6, **characterized in that** the at least one funnel-shaped component consists of a screen material.

10. The device according to one of the preceding claims, **characterized in that** a sensor (8) is arranged on a surface of the baffle plate (6) not directly facing the core area.

11. The device according to one of the preceding claims, **characterized in that** at least one introduction tube for at least one aid is installed on a surface of the baffle plate not immediately facing the core area.

12. The device according to one of the preceding claims, **characterized in that** several baffle plates (106a to 106d; 206a to 206d) are arranged in the outer casing (102; 202), and envelop parallel core areas, which are traversed by a migrating path for the disposed material.

13. The device according to claim 12, **characterized in that** the baffle plates (206a to 206d) are each enveloped by an inner casing (214a to 214d), which is tightly joined with the outer casing (202), wherein the gaps between the outer casing (202) and the inner casings (214a to 214d) and the gaps between the inner casings (214a to 214d) are filled with a loose material that does not participate in the migrating bed movement.

14. The device according to claim 13, **characterized in that** the loose material in the gaps between the outer casing (202) and inner casings (214a to 214d) and in the gaps between the inner casings (214a to 214d) consists of the same material as the loose material inside the inner casing (214a to 214d).

15. The device according to claim 13, **characterized in that** the loose material in the gaps between the outer casing (202) and inner casings (214a to 214d) and in the gaps between the inner casings (214a to 214d) consists of scrap metal, ceramic, in particular ceramic fragments, or the like.

## Revendications

1. Dispositif pour l'élimination de matériaux à haut pouvoir énergétique, avec
a) un boîtier extérieur résistant à la pression dans lequel les matériaux dont les produits finaux sont inoffensifs sont susceptibles d'être amenés à une réaction dans des conditions contrôlées ;
b) au moins un lit mouvant se déplaçant du haut vers le bas dans le boîtier extérieur, qui est réalisé en équilibre dynamique entre l'alimentation d'un produit en vrac et les matériaux à éliminer d'une part et le déversement d'un mélange de matière en vrac et des déchets issus de la réaction d'autre part,
**caractérisé en ce que**
c) dans le lit mouvant, il est prévu au moins une chicane (6 ; 106 ; 206) qui divise le lit mouvant dans une zone centrale, dans laquelle le lit mouvant se déplace sensiblement sans entrave et dans une zone annulaire entourant la zone centrale, dans laquelle le déplacement axial du lit mouvant est retardé.

2. Dispositif selon la revendication 2, **caractérisé en ce que** la chicane (6 ; 106 ; 206) comprend un composant en entonnoir.

3. Dispositif selon la revendication 2, **caractérisé en ce que** la chicane (6 ; 106 ; 206) comprend une pile de composants en entonnoir, rangés les uns sur les autres.

4. Dispositif selon la revendication 3, **caractérisé en ce que** les composants en entonnoir (6 ; 106 ; 206) sont disposés dans le même sens dans la pile.

5. Dispositif selon la revendication 3, **caractérisé en ce qu'**au moins certains composants en entonnoir sont disposés à contresens dans la pile.

6. Dispositif selon l'une quelconque des revendications 1 à 5, **caractérisé en ce qu'**au moins un composant en entonnoir (6) comporte des évidements (7) qui autorisent une descente de matière en vrac sous le composant en entonnoir (6).

7. Dispositif selon la revendication 6, **caractérisé en ce que** les évidements (7) sont disposés sur le bord présentant le plus grand diamètre du au moins un composant en entonnoir (6).

8. Dispositif selon la revendication 6, **caractérisé en ce que** le au moins un composant en entonnoir est conçu sous la forme d'une tôle perforée.

9. Dispositif selon la revendication 6, **caractérisé en ce que** le au moins un composant en entonnoir consiste dans une matière de tamisage.

10. Dispositif selon l'une quelconque des revendications précédentes, **caractérisé en ce que** sur une surface de la chicane (6) qui n'est pas directement dirigée vers la zone centrale est disposé un capteur (8).

11. Dispositif selon l'une quelconque des revendications précédentes, **caractérisé en ce que** sur une surface de la chicane qui n'est pas directement dirigée vers la zone centrale est posé au moins un tube d'introduction pour au moins un adjuvant.

12. Dispositif selon l'une quelconque des revendications précédentes, **caractérisé en ce que** plusieurs chicanes (106a à 106d ; 206a à 206d) sont disposées dans le boîtier extérieur (102 ; 202) et entourent des zones centrales parallèles, à travers lesquelles conduit chaque fois un chemin de déplacement pour la matière à éliminer.

13. Dispositif selon la revendication 12, **caractérisé en ce que** plusieurs chicanes (106a à 106d ; 206a à 206 d) sont entourées chacune d'un boîtier intérieur (214a à 214d), qui est intimement relié au boîtier extérieur (202), les intervalles entre le boîtier extérieur (202) et les boîtiers intérieurs (214a à 214d) et les intervalles entre les boîtiers intérieurs (214a à 214b) étant remblayés d'un matériau en vrac qui ne participe pas au déplacement du lit mouvant.

14. Dispositif selon la revendication 13, **caractérisé en ce que** la matière en vrac dans les intervalles entre le boîtier extérieur (202) et les boîtiers intérieurs (214a à 214d) et dans les intervalles entre les boîtiers intérieurs (214a à 214d) consiste dans le même matériau que la matière en vrac à l'intérieur du boîtier intérieur (214a à 214d).

15. Dispositif selon la revendication 13, **caractérisé en ce que** la matière en vrac dans les intervalles entre le boîtier extérieur (202) et les boîtiers intérieurs (214a à 214d), ainsi que dans les intervalles entre les boîtiers intérieurs (214a à 214d) consiste dans des résidus métalliques, dans de la céramique, notamment dans des éclats de céramique ou analogue.
